# EUROPEAN PATENT APPLICATION

(11) **EP 2 575 092 A1**
(43) Date of publication of application: **03.04.2013**
(21) Application number: 12185200.8
(22) Date of filing: 20.09.2012
(51) Int. Cl.: G06Q 10/06, G06Q 10/10, G06F 17/30

(54) **Facet data network**

(30) Priority: 30.09.2011 IN MU24332011
(71) Applicant: Tata Consultancy Services Limited, 400021 Mumbay (IN)
(72) Inventor: Pothineni, Dinesh, 600113 Chennai, Tamil Nadu (IN); Kumar Mishra, Pratik, 600113 Chennai, Tamil Nadu (IN); Sundararajan, Deepak, 600113 Chennai, Tamil Nadu (IN)
(74) Representative: Jansen, Cornelis Marinus

(57) **Abstract**

Systems and methods for developing a facet data network for an employee of an enterprise. The method comprises receiving a plurality of information records from at least one information source. The plurality of information records relates to at least one activity performed by the employee of the enterprise. The method further comprises associating each of the plurality of information records with at least one facet from amongst a plurality of facets defined for one or more employees of the enterprise. The method further comprises generating a plurality of information packets, each information packet corresponding to an information record from amongst the plurality of information records. An information packet from amongst the plurality of information packets links to one or more other information packets from amongst the plurality of information packets for building the facet data network.

## Description

### Technical Field

The present subject matter described herein, in general, relates to a network of employee data, in particular, relates to systems and methods for generating a network comprising information associated with employees of an enterprise.

### BACKGROUND

Employees in an enterprise work at several roles and develop various competencies. These employees also build connections with colleagues through emails, social/collaborative platforms, and direct contacts. Further, these employees also engage in various social networking platforms outside workplace. Specifically, the employees perform a variety of activities on internal platforms and external platforms in the enterprise. Examples of internal platforms may include knowledge management platforms, talent management platforms, instant messengers, and e-mail servers present in the enterprise. Activities performed on internal platforms may include participation in discussions, presentations, attending or conducting training sessions, brainstorming sessions on several topics, interaction with colleagues through calls, emails, instant messages and other activities performed by the employees within the enterprise. Activities performed on the external platforms may include, participating in a discussion or contributing some content relating to a certain topic on an online forum or interaction with acquaintances on a social networking website.

Activities performed on the internal platforms and along with the activities performed on the external platforms may reveal a gamut of information about the employees.

### SUMMARY

This summary is provided to introduce concepts related to systems and methods for developing a facet data network for an enterprise and the concepts are further described below in the detailed description. This summary is not intended to identify essential features of the claimed subject matter nor is it intended for use in determining or limiting the scope of the claimed subject matter.

In one implementation, a method for developing a facet data network for an employee of an enterprise is provided. The method comprises receiving a plurality of information records from at least one information source. The plurality of information records relates to at least one activity performed by the employee of the enterprise. The method further comprises associating each of the plurality of information records with at least one facet from amongst a plurality of facets defined for one or more employees of the enterprise. The method further comprises generating a plurality of information packets, each information packet corresponding to an information record from amongst the plurality of information records. An information packet from amongst the plurality of information packets links to one or more other information packets from amongst the plurality of information packets for building the facet data network.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.
Figure 1 illustrates a network implementation of a system for developing a facet data network for an enterprise, in accordance with an implementation of the present subject matter.
Figure 2a illustrates a packer header of a Q-bit, in accordance with an embodiment of the present subject matter.
Figure 2b illustrates a facet data network, in accordance with an embodiment of the present subject matter.
Figure 3 illustrates a method for developing a facet data network for an enterprise, in accordance with an implementation of the present subject matter.

### DETAILED DESCRIPTION

Systems and methods for generating a facet data network are described herein. The system and the method can be implemented in a variety of computing systems. The computing systems that can implement the described method include, but are not restricted to, mainframe computers, workstations, personal computers, desktop computers, minicomputers, servers, multiprocessor systems, laptops, mobile computing devices, and the like.

The present subject matter in general relates to a network of data pertaining to employees of an enterprise. Typically, employees in an enterprise work at several roles and develop various competencies. These employees also build connections with colleagues through emails, social/collaborative platforms, and direct contacts. Further, these employees also engage in various social networking platforms outside workplace. Activities performed at the social networking platforms along with the activities performed at the workplace may reveal a gamut of information, hereinafter referred to as information records of the employees.

For example, employee A and employee B may chat through an Instant Messenger (IM) of the enterprise and a subject matter of the chat may relate to a topic X. Information record that may be gathered from such an activity may be, for example, that the employee B and employee A are acquainted with each other and that the employee B and employee A possess knowledge of topic X.

In another example, an employee A may perform an activity, such as contributing a content relating to topic Y in a knowledge management platform of the enterprise. One or more information records may be gathered from such an activity. In one example, an information record that may be captured is that the employee A has expertise in topic Y. Further, consider a case where the employee A receives feedbacks from one or more colleagues indicating that the content relating to topic Y is well-presented. In such a case another information record that may be gathered is that the employee A is good at communication skills. In one more situation, a feedback suggesting that the content contributed by the employee A presents an innovative solution relating to topic Y may be received. As a result of such a suggestion, another information record that the employee A is innovative or has innovative skills may be captured. Information records may pertain to various facets of an employee. As apparent from the above example, an information record may relate to communication skill while the other may relate to a behavioral aspect of an employee i.e. innovative nature and yet another information record may relate to a facet, such as expertise in a certain topic, which is topic Y in the above example.

These information records may be captured in a meaningful way so as to provide strategic advantage to the enterprise. For example, these information records may be used to get an insight of qualities, expertise, interests, strengths, weaknesses, behavioral model, and various other facets associated with the employees, thereby helping the enterprise in several ways, such as to assign right job to a right talent.

In accordance with an embodiment of the present subject matter, the above mentioned information records may be fetched from internal platforms and external platforms accessed by the employees. Internal platforms and external platforms may be monitored continuously to track the activities performed by the employees so as to fetch or mine the information related to the employees. Examples of internal platforms may include knowledge management platforms, talent management platforms, instant messengers, and e-mail servers present in the enterprise. Activities performed on internal platforms may include participation in discussions, presentations, attending or conducting training sessions, brainstorming sessions on several topics, interaction with colleagues through calls, emails, instant messages and other activities performed by the employees within the enterprise. Activities performed on the external platforms may include, participating in a discussion or contributing some content relating to a certain topic on an online forum or interaction with acquaintances on a social networking website.

The above mentioned information records may be used to build a facet data network for an enterprise. Accordingly, the present description is presented in context of a facet data network of employees of an enterprise where data relating to various facets of an employee, i.e., information records, are gathered from the activities that the employees perform on internal platforms of the enterprise. In will be appreciated by one skilled in the art that although the present description is explained in context of an enterprise and its internal platforms, the concepts related thereto may be extended to other group of people who may not necessarily be engaged in an enterprise and may perform activities on any forum, such as a social networking website.

In one implementation, after the information records about the employees are mined from the activities performed on the internal platforms and external platforms, each information record is categorized into one or more facets. For example, if it is determined that an idea contributed by an employee in the talent management platform is innovative, then an information record that the employee is innovative may be associated with a facet called 'innovative.' Similarly, each information record may be captured and associated with one or more facets such as behavior, skill, expertise, and the like.

In the present embodiment, once the information records fetched from the activities performed on the internal platforms are associated with one or more facets, the information records may be used to form the facet data network. The facet data network may be understood as a network data hub or a network of information packets associated with one or more employees such that each information packet comprises information pertaining to a facet of an employee.

In one embodiment, a facet data network may be built for a content. For example, consider that an employee A provides a solution relating to a software security vulnerability. The employee A may upload the solution on an internal forum. Other employees may start commenting on the solution provided by employee A. For example one or more comments may include suggestions to tweak the solution to improvise it. Some comments may reveal problems that may exist in implementing the solution suggested by employee A. Accordingly, information record may be captured for the content and a facet data network may be created for the content.

Although the explanation herein is in context of a facet data network for individual, such as employees, it will be understood that the same may be applied to a facet data network for a content, albeit a few modification that will be apparent to one skilled in the art.

In one implementation, the data hub comprises information records in the form of information packets. Each information packet may include a header comprising a destination address of an employee, an indication of a facet associated with the information record, at least one facet tag, a flux direction, a flux value, a feedback agent, an information packet ID, a timestamp, and other extension fields. The headers may interlink various information packets with one another in the data hub based upon an indication of facet present in the headers. Thus based upon the number of information packets associated with an employee, the flux value of the information packets, and the flux direction of the information packets, a facet data network may be generated.

The facet data network reveals one or more facets of the employee. For example, the facet data network may reveal facets such as interaction behavior, ability to innovate, ability to work in a team, ability to work independently, and the like. The facet data network may enable the enterprise to understand the technological behavioral, social trends, strengths, weakness, and other aspects associated with the employees, thereby enabling the enterprise to utilize the employees better and help the employees realize their career goals, in terms of new work allocations, engaging in learning and development programs, and the like.

These and other aspects of the present subject matter would be described in greater detail in conjunction with the following figures. While aspects of described systems and methods for building a facet data network may be implemented in any number of different computing systems, environments, and/or configurations, the embodiments are described in the context of the following system.

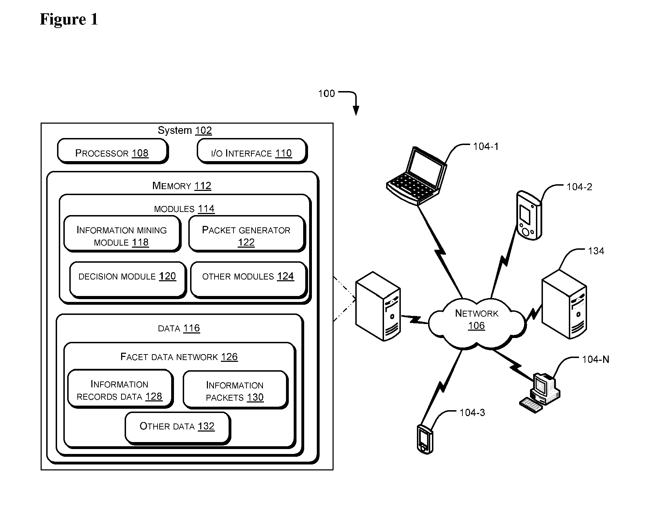

Figure 1 illustrates a network 100 implementing a system 102 for developing a facet data network for an enterprise, in accordance with an embodiment of the present subject matter. The system 102 may be implemented in a variety of computing systems such as a laptop computer, a desktop computer, a notebook, a workstation, a mainframe computer, a server, a network server, and the like. It will be understood that the system 102 may be accessed through one or more client devices 104-1, 104-2, 104-3, and 104-N, that may be collectively referred to as client devices 104. Examples of the client devices 104 may include, but are not limited to, a portable computer, a personal digital assistant, a handheld device, and a workstation. The client devices 104 are communicatively coupled to the system 102 through a network 106 for facilitating one or more users to access the system 102.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like. In one embodiment, the system 102 may include at least one processor 108, an I/O interface 110, and a memory 112. The processor 108 may be implemented as one or more microprocessors, microcomputers, microcontrollers, digital signal processors, central processing units, state machines, logic circuitries, and/or any devices that manipulate signals based on operational instructions. Among other capabilities, the processor 108 is configured to fetch and execute computer-readable instructions stored in the memory 112.

The I/O interface 110 may include a variety of software and hardware interfaces, for example, a web interface, a graphical user interface, an the like. The I/O interface 110 may allow the system 102 to interact with the client devices 104. Further, the I/O interface 110 may enable the system 102 to communicate with other computing devices, such as web servers and external data servers (not shown). The I/O interface 110 can facilitate multiple communications within a wide variety of networks and protocol types, including wired networks, for example LAN, cable, etc., and wireless networks such as WLAN, cellular, or satellite. The I/O interface 110 may include one or more ports for connecting a number of devices to one another or to another server.

The memory 112 may include any computer-readable medium known in the art including, for example, volatile memory such as static random access memory (SRAM) and dynamic random access memory (DRAM), and/or nonvolatile memory, such as read only memory (ROM), erasable programmable ROM, flash memories, hard disks, optical disks, and magnetic tapes. The memory 112 may include modules 114 and data 116.

The modules 114 include routines, programs, objects, components, data structures, etc., which perform particular tasks or implement particular abstract data types. In one implementation, the modules 114 may include an information mining module (IMM) 118, a decision module 120, a packet generator 122, and other modules 124. The other modules 124 may include programs or coded instructions that supplement applications and functions of the system 102.

The data 116, amongst other things, serves as a repository for storing data processed, received, and generated by one or more of the modules 114. The data 116 may also include a facet data network 126 comprising information records data 128 and information packets data 130. Data 116 may further include other data 132.

In one implementation, an employee of an enterprise may perform certain activities on one or more internal platforms of the enterprise. The activities performed on internal platforms may include activities related to work assigned to the employee in the enterprise. For example, the employee may be asked to perform the following activities in the enterprise on the internal platforms: prepare and present a presentation on a certain topic, or develop a program logic for a software program, or brainstorm a solution for a problem existing in a manufacturing unit, or streamline a process flow, or manage progress of a group of employees and perform quality checks for them, or provide a training to group of people, or strategize business development, or hire new people for the enterprise, or research on a topic, or organize a seminar, or draft a patent application, or perform a market analysis of particular item, or accumulate client needs and develop a software program accordingly, and other activities depending upon a field of work of the employee.

In one embodiment, employees may also perform some activities which may not be directly connected with the field of work of the employee on certain external platforms. Activities performed by the employee on the external platforms may include writing a blog, or building a professional profile on social networking website, or participating in an online discussion on a certain topic such as JAVA, or contributing to a development of a particular subject, or discussing a topic on an online forum, or voting in a poll question asked in a news website, or commenting on a subject, and the other such activities.

While there may be several internal and external platforms with which the employees may interact with to perform the one or more of the above described activities, for ease of explanation, a single platform, hereinafter referred to as a platform 134 is depicted in Figure 1. The platform 134 may be implemented in a variety of computing systems such as a laptop computer, a desktop computer, a notebook, a workstation, a mainframe computer, a server, a network server, and the like.

The activities, as mentioned above, may be performed by the employees using their respective client devices 104. All the activities performed on the client device 104 by an employee may be monitored by the IMM 118 of the system 102. The IMM 118 may fetch or mine information records relating to all the activities performed on the internal and external platforms. In other words, IMM 118 may fetch information records relating to all the activities performed by the employee on the client device 104. In one example, the IMM 118 may be a conventionally known data mining system or a text mining application configured to extract information records relating to the various activities. For example, when the employee accesses his profile on a social networking website using the client device 104, the IMM 118 may fetch a list of people connected with the employee on said social networking website. In another example, in case the employee is involved in developing a software program to automate a work process, then the IMM 118 may be configured to fetch details relating to the software program, such as the application framework being used to develop the software program on the client device 104. Such information records which are extracted by monitoring the activities of an employee are saved as information records data 128.

In one implementation, the IMM 118 may not directly extract information records underlying various activities that may be performed by an employee but may be configured to receive the information records from an external IMM (not shown in figures). In one embodiment, the platform 134 may be considered to be a knowledge management platform or a talent management system of the enterprise wherein the platform 134 may comprise the external IMM. The external IMM may also be implemented as a conventionally known data mining system.

For example, consider that an employee performs an activity, such as submitting a paper relating to a certain topic on the platform 134. In the present implementation, the external IMM implemented in the platform 134 and may be configured to extract information records having various details. For example, an information record may be that the employee is an expert in a topic. Further, the external IMM may also be capable of receiving additional information records. Additional information records may include feedbacks that the colleagues of the employee may wish give on an activity performed by the employee in the enterprise. For example, the colleagues may wish to provide a feedback about the paper presented by the employee. In another example, one or more colleagues may provide feedbacks about a solution provided by the employee to improve a manufacturing process, or about a corporate strategy suggested by the employee in a meeting, or about a contribution of the employee on a particular topic, and other such activities. All such feedbacks are submitted to the platform 134. In one example, the colleagues may send an email to the platform 134 or use an application to upload feedback or post a comment on the platform 134. These feedbacks may be monitored by the external IMM to extract the information records relating to the activity performed by the employee. It may be understood that each activity performed by the employee may have one or more information records relating to the activity performed. For example, if the employee excellently presented a paper on JAVA and the colleagues provided good feedback relating to communication skills and relating to JAVA expertise of the employee, accordingly one information record may relate to the communication skill and another information record may relate to the JAVA expertise. In this way, an external IMM residing in each of the internal and external platforms may gather information records about all activities performed by an employee on the respective internal and external platforms and communicate the same to the IMM 118 of the system 102.

As explained above, activities performed by the employee as mentioned above may be performed by the employee using their respective client devices 104. Accordingly, in one embodiment, the external IMM may reside in the client device 104 and may be configured to monitor all the activities performed on the client device 104 by the employee. Information records that may be generated by the external IMM based on such activities may be provided to the IMM 118 of the system 102.

Once all the information records relating to the various activities of the employees are available with the IMM 118, the IMM 118 may transfer the information records to the decision module 120. The decision module 120 includes a list of predefined facets that may be associated with the employees of the enterprise. Facets of an employee may provide details about strengths, areas of improvements, interests, qualities, passions, hobbies, skills, and behavioral characteristics of the employees. Example of facets may include, but not limited to, innovative, collaborative, introvert, extrovert, team player, presentation skills, multi-tasking, oration, interaction behavior, writing skills, subject expertise, learning abilities, adaptive, curator, communication skills, and affinities towards something. In one implementation, after receiving the information records related to the activities of the employee, the decision module 120 may associate each information record to one or more facets. For example, an information record that the employee excellently presented a paper on JAVA in the enterprise may be assigned to three facets, namely, 'good presentation skills,' 'JAVA expert,' and 'good orator.' Similarly, if the employee contributed an innovative solution for an existing manufacturing process problem, then such an information record about the employee may be categorized to a facet called 'innovative.' Similarly, if the employee took a lot of time to learn a new technology, then such an information record may be categorized to a facet relating to 'areas of improvement.' In this way, each information record may be associated with one or more facets by the decision module 120.

After each information record of the employee is assigned to one or more facets, the packet generator 122 may generate information packets 130, interchangeably referred to as Q-bits in the present description, corresponding to the information records. A plurality of information packets are linked to one another to build the face data network 126 as explained subsequently.

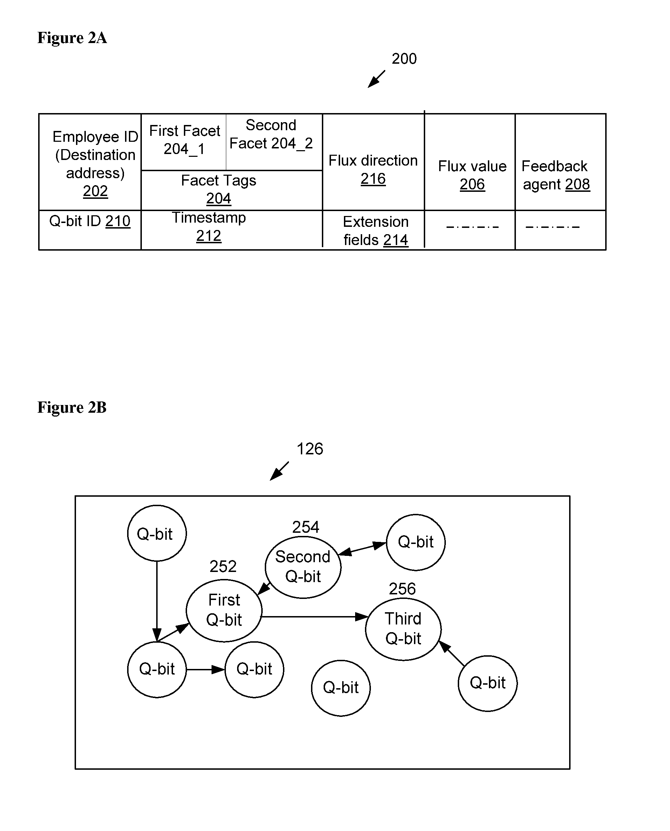

Referring to Figure 2a, a packet header 200 is defined for each information packet or Q-bit, so as to link the Q-bits to one another. Each Q-bit has the packet header 200 and a packet body that comprises an information record relating to an activity performed by the employee. For example, if the employee presented a paper and one or more colleagues provided feedback on the paper presented, then the packet body may comprise information relating to the paper presented and the feedbacks received from the colleagues, while, the packet header 200 may comprise summary data relating to the activity performed by the employee. The summary data may include at least one of a destination address of the employee i.e. an employee ID 202 of the employee performing the activity, an indication of one or more facets associated with an information record corresponding to an activity performed by the employee i.e. a facet tag 204, a flux value 206, a feedback agent 208, an identification number of the information packet i.e. a Q-bit ID 210, a timestamp 212, extension fields 214, and a flux direction 216. Such information packets or Q-bits are saved as information packets data 130.

In one implementation, the packet headers 200 may be used to link the Q-bits to form the facet data network 126. Details of facet data network 126 are illustrated in Figure 2b.

In one implementation, the employee ID 202 may include at least one of a photo image of the employee, an Internet Protocol (IP) address of the client device 104 of the employee, an employee reference number uniquely identifying the employee in the enterprise, and a complete name of the employee. The facet tags 204 are the indication of facets to which an information record is associated with. For example, if the information record in the packet body is associated with two facets, namely, innovation and excellent team player, then the facet tags 204 would be 'innovative' and 'excellent team player.' Therefore, a first facet 204-1 in the packet header 200 would be 'innovative' and a second facet 204-2 in the packet header 200 would be 'excellent team player.' The flux value 206 may depend on the information source from which the information record is mined. In one embodiment, a predetermined weightage may be assigned to each of the internal and external platforms. All information records gathered relating to an activity preformed on a particular internal or external platform may accordingly have a flux value 206 based on the weightage associated with the particular internal or external platform. For example, if the information record is mined from a talent management platform then the flux value would be high, however, if the information record is mined from an external platform such as a social networking website, then the flux value 206 would be low.

The feedback agent 208 is a person who provides feedback on an activity performed by the employee. The Q-bit ID 210 is a unique reference number of the Q-bit. The timestamp 212 is an indication of time at which the Q-bit was generated. The extension fields 214 include other metadata.

Referring to Figure 2b, the facet data network 126 is shown in accordance with an embodiment of the present subject matter. The facet data network 126 may include a plurality of Q-bits. The Q-bits may be linked to another and have a certain flux direction. A flux direction 216 may be of three types, namely, influx, outflux, and biflux. A Q-bit may have an influx direction if the Q-bit can enhance a facet value present in another Q-bit in a facet data network 126 as shown in Figure 2b. An example may be considered to understand flux direction 216. It may be considered that the facet data network 126 includes three Q-bits associated with an employee. The three Q-bits may include a first Q-bit 252, a second Q-bit 254, and a third Q-bit 256. The first Q-bit 252 may include two facet tags, namely, 'innovative' and 'good learning abilities' for an employee. A second Q-bit 254 may have a facet tag, namely, 'innovative' because the employee may have provided an innovative solution to a problem in the enterprise. The second Q-bit 254 may be linked to the first Q-bit 252 with an influx having direction from the second Q-bit 254 to the first Q-bit 252 as shown in Figure 2b. In other words, since the second Q-bit 254 adds value to the facet value present in the first Q-bit 252, the flux direction will be inwards i.e. influx. Now consider that the third Q-bit 256 has a facet tag, namely, 'poor learning abilities' for the employee. The third Q-bit 256 may be linked to the first Q-bit 252 with an outflux having direction from the first Q-bit 252 to the third Q-bit 256 as shown in Figure 2b. In other words, since the third Q-bit 256 diminishes the facet value present in the first Q-bit 252, the flux direction will be outwards i.e. outflux. Similarly, biflux is used when both the employee and a feedback agent are benefitted.

In this way, the facet data network 126 may be built. Specifically, the facet data network 126 may continuously receive Q-bits for employees of an enterprise. The Q-bits may be linked in the facet data network 126 using the packet headers 200. The facet data network 126 expands as more and more Q-bits are added to the facet data network 126. In one implementation, a single Q-bit may belong to more than one employee. For example, a Q-bit related to an activity performed by a group of employees. Further, the facet data network 126 may also include photo images of employees as nodes in the facet data network 126. The photo images of the employees may be linked to their respective Q-bits. A Q-bit associated with more than one employee may be linked to the photo images of all the associated employees. In one implementation, the facet data network 126 may be implemented using a graph database "Neo4j" as known in the art.

In one implementation, the facet data network 126 may be used by the enterprise to get an insight of qualities, expertise, interests, strengths, weaknesses, behavioral model, and various other facets associated with the employees, thereby helping the enterprise in several ways, such as to assign right job to a right talent. For example, if the enterprise is looking for a JAVA expert, then the facet data network 126 may help to identify employees who are expert in JAVA. Further, if the enterprise is looking for an employee who personally knows a CEO of a company X, then the facet data network 126 may help to identify the employee who is connected with the CEO on a social networking platform because, in one implementation, the facet data network 126 holds information records relating to the connections of the employee on social networking platforms. As evident, the facet data network 126 may have many applications, for example, the facet data network 126 may be used to provide information packets associated with an employee in response to information retrieval requests. Referring to the foregoing example, an information retrieval request may relate to indentifying a JAVA expert and accordingly, in one example, employee IDs of one or more employees who are experts in JAVA may be searched and provided in response. Similarly, in another example, a query about an employee who may be acquainted with the CEO of a company X may be included in an information retrieval request.

In one implementation, the facet data network 126 may be analyzed to generate an activity and/or association profile, also referred to as a reputation graph, of an employee. For instance, the facet data network 126 comprises information regarding various activities performed by an employee and various interactions he may have had with people he may be associated with in some manner. These information, such as details relating to the activities and association are present in the Q-bits associated with the employee. Every activity may add information pertaining to a facet of an employee, in the form of a new Q-bit, if such information is not preexisting in the facet data network 126. Thus, if all Q-bits associated with an employee were to be retrieved from the facet data network 126, it may consequent in a reputation graph of the employee that may reveal activities and association of the employee.

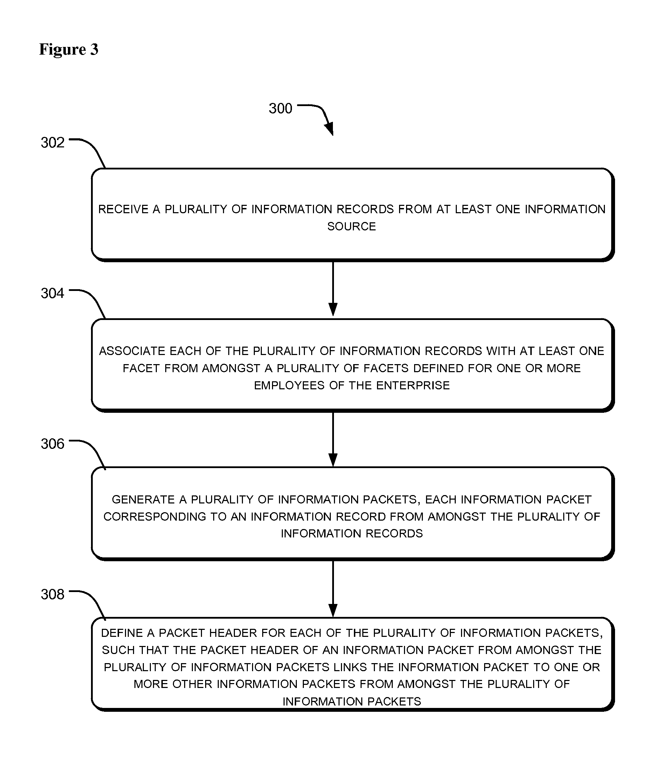

Figure 3 illustrates a method 300 for developing a facet data network for an employee of an enterprise, according to an implementation of the present subject matter. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communications network. In a distributed computing environment, computer executable instructions may be located in both local and remote computer storage media, including memory storage devices.

The order in which the method 300 is described is not intended to be construed as a limitation, and any number of the described method blocks can be combined in any order to implement the method 300 or alternate methods. Additionally, individual blocks may be deleted from the method 300 without departing from the spirit and scope of the subject matter described herein. Furthermore, the method can be implemented in any suitable hardware, software, firmware, or combination thereof. However, for ease of explanation, in the embodiments described below, the method 300 may be considered to be implemented in the above described system 102.

At block 302, a plurality of information records relating to at least one activity performed by an employee of the enterprise from at least one information source may be received. In one implementation, the information records may be received by the information mining module 118.

At block 304, each of the plurality of information records may be associated with at least one facet from amongst a plurality of facets defined for one or more employees of the enterprise by the decision module 120.

At block 306, a plurality of information packets may be generated by the packet generator 122. Each information packet corresponds to an information record from amongst the plurality of information records. Further, an information packet from amongst the plurality of information packets links to one or more other information packets from amongst the plurality of information packets for building the facet data network.

At block 308, a packet header for each of the plurality of information packets is defined. The packet header of an information packet from amongst the plurality of information packets links the information packet to one or more other information packets from amongst the plurality of information packets.

Although implementations for methods and systems for developing a facet data network for an enterprise have been described in language specific to structural features and/or methods, it is to be understood that the appended claims are not necessarily limited to the specific features or methods described. Rather, the specific features and methods are disclosed as examples of implementations for building a facet data network.

## Claims

1. A computerized method for developing a facet data network for an employee of an enterprise, the method comprising:
receiving a plurality of information records from at least one information source, wherein the plurality of information records relates to at least one activity performed by the employee of the enterprise;
associating each of the plurality of information records with at least one facet from amongst a plurality of facets defined for one or more employees of the enterprise; and
generating a plurality of information packets, each information packet corresponding to an information record from amongst the plurality of information records, wherein an information packet from amongst the plurality of information packets links to one or more other information packets from amongst the plurality of information packets for building the facet data network.

2. The method as claimed in claim 1, further comprising defining a packet header for each of the plurality of information packets, such that the packet header of an information packet from amongst the plurality of information packets links the information packet to one or more other information packets from amongst the plurality of information packets.

3. The method as claimed in claim 2, wherein each packet header comprises an indication of a facet associated with an information record corresponding to an information packet.

4. The method as claimed in claim 2, wherein each packet header comprises at least one of a flux value and a flux direction associated with an information record corresponding to an information packet.

5. The method as claimed in claim 4, wherein the flux direction is one of an influx, an outflux, and a biflux.

6. The method as claimed in claim 2, wherein each packet header comprises an identity of the employee performing the at least one activity.

7. The method as claimed in claim 1, wherein the receiving further comprises mining the plurality of information records from the at least one information source.

8. The method as claimed in claim 1, providing the information packets associated with the employee based upon an information retrieval request.

9. A system (102) for developing a facet data network (126) for an employee of an enterprise, the system comprising:
a processor (108); and
a memory (112) coupled to the processor, the memory comprising
an information mining module (118) for receiving a plurality of information records from at least one information source, wherein the plurality of information records relates to at least one activity performed by the employee of the enterprise;
a decision module (120) for associating each of the plurality of information records with at least one facet from amongst a plurality of facets defined for one or more employees of the enterprise; and
a packet generator (122) for generating a plurality of information packets, each information packet corresponding to an information record from amongst the plurality of information records, wherein an information packet from amongst the plurality of information packets links to one or more other information packets from amongst the plurality of information packets for building the facet data network.

10. The system (102) as claimed in claim 9, wherein the packet generator (122) is further configured to define a packet header for each of the plurality of information packets, such that the packet header of an information packet from amongst the plurality of information packets links the information packet to one or more other information packets from amongst the plurality of information packets.

11. The system (102) as claimed in claim 10, wherein each packet header comprises at least one of an indication of a facet, a flux value, and a flux direction associated with an information record corresponding to an information packet.

12. The system (102) as claimed in claim 11, wherein the flux direction is one of an influx, an outflux, and a biflux.

13. The system (102) as claimed in claim 9, wherein the one or more facets are innovative, collaborative, outgoing, team player, presentation skills, multi-tasking, oration, interaction behavior, quick learner, adaptive, curator, and communication skills.

14. The system (102) as claimed in claim 9, wherein the information mining module (118) is further configured to extract the plurality of information records from the at least one information source.

15. A computer-readable medium having embodied thereon a computer program for executing a method for developing a facet data network for an employee of an enterprise, the method comprising:
receiving a plurality of information records from at least one information source, wherein the plurality of information records relates to at least one activity performed by the employee of the enterprise;
associating each of the plurality of information records with at least one facet from amongst a plurality of facets defined for one or more employees of the enterprise; and
generating a plurality of information packets, each information packet corresponding to an information record from amongst the plurality of information records, wherein an information packet from amongst the plurality of information packets links to one or more other information packets from amongst the plurality of information packets for building the facet data network.
